# EUROPEAN PATENT APPLICATION

(11) **EP 4 369 746 A1**
(43) Date of publication of application: **15.05.2024**
(21) Application number: 22855245.1
(22) Date of filing: 27.07.2022
(51) Int. Cl.: H04W 4/06

(54) **COMMUNICATION METHOD AND APPARATUS**

(30) Priority: 10.08.2021 CN 202110915602
(71) Applicant: Huawei Technologies Co., Ltd., Shenzhen, Guangdong 518129 (CN)
(72) Inventor: WANG, Yaxin, Shenzhen, Guangdong 518129 (CN); LI, Yan, Shenzhen, Guangdong 518129 (CN); LI, Meng, Shenzhen, Guangdong 518129 (CN)
(74) Representative: Epping - Hermann - Fischer
(86) International application number: PCT/CN2022/108354
(87) International publication number: WO 2023/016262

(57) **Abstract**

This application relates to the field of communication technologies. A communication method and an apparatus are provided, to provide a provision manner of a multicast service for a terminal device. An SMF receives a first message from a terminal, where the first message includes a multicast address. The SMF sends a second message to an NRF, where the second message is used to query for an SMF that establishes a multicast session for a multicast service corresponding to the multicast address. The first SMF receives a third message from the NRF, where the third message indicates that the SMF that establishes a multicast session for the multicast service corresponding to the multicast address is not found. The first SMF sends a fourth message to the terminal, where the fourth message indicates that the terminal is rejected to join the multicast session corresponding to the multicast address. A multicast session establishment scenario and a multicast session configuration scenario are distinguished by using the second message, and authorization verification may be performed on the multicast service. When the authorization verification fails, the NRF does not allocate an SMF to the first SMF for multicast session establishment, to properly provide a provision manner of the multicast service for the terminal device.

## Description

### CROSS-REFERENCE TO RELATED APPLICATIONS

This application claims priority to Chinese Patent Application No. 202110915602.X, filed with the China National Intellectual Property Administration on August 10, 2021 and entitled "COMMUNICATION METHOD AND APPARATUS", which is incorporated herein by reference in its entirety.

### TECHNICAL FIELD

Embodiments of this application relate to the communication field, and in particular, to a communication method and an apparatus.

### BACKGROUND

With rapid development of global networks, there is a rapid increase in communication traffic. In comparison with common services, video and audio services such as video on demand services, video phone services, and video conference services, and services such as internet of vehicles services and internet of things services have features of a large data amount, high delay sensitivity, long duration, and the like. Based on these service requirements, a multicast/broadcast service (multicast/broadcast service, MBS) is proposed, and the MBS has become one of key technologies in network evolution.

In a multicast service, how to properly provide a multicast service for a terminal device is a technical problem to be resolved.

### SUMMARY

Embodiments of this application provide a communication method and an apparatus, to provide a provision manner of a multicast service for a terminal device.

According to a first aspect, a communication method is provided. The method may be performed by a first SMF network element, or may be performed by a component, for example, a chip or a processor used in the first SMF network element. The following describes an example in which the method is performed by the first SMF network element. First, the first session management function SMF network element receives a first message from a terminal device. The first message includes a multicast address. The first message indicates that the terminal device requests to join a multicast session corresponding to the multicast address. Then, the first SMF network element sends a second message to a network registration function NRF network element. The second message includes the multicast address. The second message is used to query for an SMF that establishes a multicast session for a multicast service corresponding to the multicast address. Then, the first SMF network element receives a third message from the NRF. The third message indicates that the SMF that establishes the multicast session for the multicast service corresponding to the multicast address is not found. Next, the first SMF network element sends a fourth message to the terminal device. The fourth message indicates that the terminal device is rejected to join the multicast session corresponding to the multicast address.

A multicast session establishment scenario and a multicast session configuration scenario are distinguished by using the second message, so that the NRF network element learns that an SMF to be queried for in a current scenario is for multicast session establishment, but not for multicast session configuration. In addition, in conventional technologies, when an SMF currently serving the multicast service corresponding to the multicast address does not exist, the NRF selects an MB-SMF based on slice information and the like and feeds back the MB-SMF to the first SMF, for multicast session establishment. However, in this application, the SMF network element may perform authorization verification on the multicast service. When the authorization verification fails, the SMF network element sends, to the terminal device, indication information indicating that the joining is rejected, to avoid a waste of resources of the terminal device. In addition, during the authorization verification, the SMF network element queries the NRF network element for an appropriate SMF, and determines, based on a query result, whether the authorization verification succeeds. If the NRF network element does not allocate an SMF to the first SMF network element for multicast session establishment, the authorization verification fails. Not allocating an SMF can avoid a waste of resources and illegal attacks. In this way, a multicast service is properly provided for the terminal device.

In a possible implementation, the second message further includes a first indication, where the first indication indicates multicast session establishment. In this way, an existing message is improved by including new indication information in the existing message to indicate the multicast session establishment scenario. Universality is high.

In a possible implementation, the third message includes a second indication, where the second indication indicates that the query fails; and/or an empty SMF list. In this way, an existing message is improved by including new indication information in the existing message to indicate the multicast session establishment scenario. Universality is high. When the third message includes the empty SMF list, a format of an existing message may be inherited, so that the universality is high.

According to a second aspect, a communication method is provided. The method may be performed by a first SMF network element, or may be performed by a component, for example, a chip or a processor used in the first SMF network element. The following describes an example in which the method is performed by the first SMF network element. First, the first session management function SMF network element receives a first message from a terminal device. The first message includes a multicast address. The first message indicates that the terminal device requests to join a multicast session corresponding to the multicast address. Then, the first SMF network element sends a second message to a network registration function NRF network element. The second message includes the multicast address. The second message is used to query for an SMF that establishes a multicast session for a multicast service corresponding to the multicast address. Then, the first SMF network element receives a third message from the NRF. The third message includes information of a second SMF. The second SMF supports establishment of the multicast session for the multicast service corresponding to the multicast address. Next, the first SMF network element sends a fourth message to the terminal device. The fourth message indicates that the terminal device is accepted to join the multicast session corresponding to the multicast address.

A multicast session establishment scenario and a multicast session configuration scenario are distinguished by using the second message, so that the NRF network element learns that an SMF to be queried for in a current scenario is for multicast session establishment, but not for multicast session configuration. In the multicast session establishment scenario, the SMF network element may perform authorization verification on the multicast service. When the authorization verification succeeds, the SMF network element sends, to the terminal device, indication information indicating that the joining is allowed. In addition, during the authorization verification, the SMF network element queries the NRF network element for an appropriate SMF, and determines, based on a query result, whether the authorization verification succeeds. If the NRF network element allocates an SMF to the first SMF network element for multicast session establishment, the authorization verification succeeds. In this way, a multicast service is properly provided for the terminal device.

In a possible implementation, the second message further includes a first indication, where the first indication indicates multicast session establishment. In this way, an existing message is improved by including new indication information in the existing message to indicate the multicast session establishment scenario. Universality is high.

According to a third aspect, a communication method is provided. The method may be performed by a network registration function NRF network element, or may be performed by a component, for example, a chip or a processor used in the NRF network element. The following describes an example in which the method is performed by the NRF network element. First, the network registration function NRF network element receives a second message from a first SMF network element. The second message includes a multicast address. The second message is used to query for an SMF that establishes a multicast session for a multicast service corresponding to the multicast address. Then, the NRF sends a third message to the first SMF network element. The third message indicates that the SMF that establishes the multicast session for the multicast service corresponding to the multicast address is not found.

A multicast session establishment scenario and a multicast session configuration scenario are distinguished by using the second message, so that the NRF network element learns that an SMF to be queried for in a current scenario is for multicast session establishment, but not for multicast session configuration. In addition, in conventional technologies, when an SMF currently serving the multicast service corresponding to the multicast address does not exist, the NRF selects an MB-SMF based on slice information and the like and feeds back the MB-SMF to the first SMF, for multicast session establishment. However, in this application, the SMF network element may perform authorization verification on the multicast service. When the authorization verification fails, the SMF sends, to the terminal device, indication information indicating that the joining is rejected, to avoid a waste of resources of the terminal device. In addition, during the authorization verification, the SMF network element queries the NRF network element for an appropriate SMF, and determines, based on a query result, whether the authorization verification succeeds. If the NRF network element does not allocate an SMF to the first SMF network element for multicast session establishment, the authorization verification fails. Not allocating an SMF can avoid a waste of resources and illegal attacks. In this way, a multicast service is properly provided for the terminal device.

In a possible implementation, the second message further includes a first indication, where the first indication indicates multicast session establishment. In this way, an existing message is improved by including new indication information in the existing message to indicate the multicast session establishment scenario. Universality is high.

In a possible implementation, the third message includes a second indication, where the second indication indicates that the query fails; and/or an empty SMF list. In this way, an existing message is improved by including new indication information in the existing message to indicate the multicast session establishment scenario. Universality is high. When the third message includes the empty SMF list, a format of an existing message may be inherited, so that the universality is high.

In a possible implementation, that the NRF sends a third message to the first SMF network element includes: The NRF sends the third message to the first SMF network element when there is no SMF that supports establishment of the multicast session for the multicast service and whose allowed multicast address includes the multicast address. Alternatively, the NRF sends the third message to the first SMF network element when an SMF currently serving the multicast service corresponding to the multicast address does not exist and an allowed multicast address of an SMF that supports establishment of the multicast session for the multicast service does not include the multicast address. The NRF sends the third message to the first SMF network element when an allowed multicast address of an operator does not include the multicast address.

In a possible implementation, the NRF network element receives the allowed multicast address of the SMF that supports establishment of the multicast session for the multicast service. The allowed multicast address does not include the multicast address.

In a possible implementation, the NRF network element receives the allowed multicast address of the operator. The allowed multicast address of the operator does not include the multicast address. In a possible implementation, the NRF network element locally queries whether the multicast address belongs to the allowed multicast address of the operator. Alternatively, the NRF queries, from a unified data repository UDR network element, whether the multicast address belongs to the allowed multicast address of the operator.

According to a fourth aspect, a communication method is provided. The method may be performed by a network registration function NRF network element, or may be performed by a component, for example, a chip or a processor used in the NRF network element. The following describes an example in which the method is performed by the NRF network element. First, the network registration function NRF network element receives a second message from a first SMF network element. The second message includes a multicast address. The second message is used to query for an SMF that establishes a multicast session for a multicast service corresponding to the multicast address. Then, the NRF network element sends a third message to the first SMF network element. The third message includes information of a second SMF. The second SMF supports establishment of the multicast session for the multicast service corresponding to the multicast address.

A multicast session establishment scenario and a multicast session configuration scenario are distinguished by using the second message, so that the NRF network element learns that an SMF to be queried for in a current scenario is for multicast session establishment, but not for multicast session configuration. The SMF network element may perform authorization verification on the multicast service. When the authorization verification succeeds, the SMF network element sends, to the terminal device, indication information indicating that the joining is allowed. In addition, during the authorization verification, the SMF network element queries the NRF network element for an appropriate SMF, and determines, based on a query result, whether the authorization verification succeeds. If the NRF network element allocates an SMF to the first SMF network element for multicast session establishment, the authorization verification succeeds. In this way, a multicast service is properly provided for the terminal device.

In a possible implementation, the second message further includes a first indication, where the first indication indicates multicast session establishment. In this way, an existing message is improved by including new indication information in the existing message to indicate the multicast session establishment scenario. Universality is high.

In a possible implementation, the second SMF is an SMF currently serving the multicast session corresponding to the multicast address. Alternatively, an allowed multicast address of the second SMF includes the multicast address.

In a possible implementation, the NRF network element receives the allowed multicast address of the second SMF. The allowed multicast address of the second SMF includes the multicast address. In a possible implementation, when the SMF currently serving the multicast service corresponding to the multicast address does not exist, and the multicast address belongs to an allowed multicast address of an operator, the NRF network element configures the SMF that establishes the multicast session for the multicast service corresponding to the multicast address.

In a possible implementation, the NRF network element receives the allowed multicast address of the operator. The allowed multicast address of the operator includes the multicast address.

In a possible implementation, the NRF network element locally queries whether the multicast address belongs to the allowed multicast address of the operator. Alternatively, the NRF queries, from a unified data repository UDR network element, whether the multicast address belongs to the allowed multicast address of the operator.

According to a fifth aspect, a communication apparatus is provided. The communication apparatus has a function of implementing any one of the first aspect or the possible implementations of the first aspect, a function of implementing any one of the second aspect or the possible implementations of the second aspect, a function of implementing any one of the third aspect or the possible implementations of the third aspect, or a function of implementing any one of the fourth aspect or the possible implementations of the fourth aspect. The functions may be implemented by hardware, or may be implemented by hardware by executing corresponding software. The hardware or the software includes one or more functional modules corresponding to the foregoing functions.

According to a sixth aspect, a communication apparatus is provided, including a processor, and optionally, further including a memory. The processor is coupled to the memory. The memory is configured to store computer programs or instructions. The processor is configured to execute some or all of the computer programs or instructions in the memory; and when the some or all of the computer programs or instructions are executed, the processor is configured to implement functions of the first SMF network element in the method according to any one of the first aspect or the possible implementations of the first aspect, or implement functions of the first SMF network element in the method according to any one of the second aspect or the possible implementations of the second aspect, or implement functions of the NRF network element in any one of the third aspect or the possible implementations of the third aspect, or implement functions of the NRF network element in any one of the fourth aspect or the possible implementations of the fourth aspect.

In a possible implementation, the apparatus may further include a transceiver, and the transceiver is configured to transmit a signal processed by the processor, or receive a signal input to the processor. The transceiver may perform a sending action or a receiving action performed by the first SMF network element in any one of the first aspect or the possible implementations of the first aspect; or perform a sending action or a receiving action performed by the first SMF network element in any one of the second aspect or the possible implementations of the second aspect; or perform a sending action or a receiving action performed by the NRF network element in any one of the third aspect or the possible implementations of the third aspect; or perform a sending action or a receiving action performed by the NRF network element in any one of the fourth aspect or the possible implementations of the fourth aspect.

According to a seventh aspect, this application provides a chip system. The chip system includes one or more processors (which may also be referred to as processing circuits). The processor and a memory (which may also be referred to as a storage medium) are electrically coupled. The memory may be located in the chip system, or may not be located in the chip system. The memory is configured to store computer programs or instructions. The processor is configured to execute some or all of the computer programs or instructions in the memory; and when the some or all of the computer programs or instructions are executed, the processor is configured to implement functions of the first SMF network element in the method according to any one of the first aspect or the possible implementations of the first aspect, or implement functions of the first SMF network element in the method according to any one of the second aspect or the possible implementations of the second aspect, or implement functions of the NRF network element in any one of the third aspect or the possible implementations of the third aspect, or implement functions of the NRF network element in any one of the fourth aspect or the possible implementations of the fourth aspect.

In a possible implementation, the chip system may further include an input/output interface (which may also be referred to as a communication interface). The input/output interface is configured to output a signal processed by the processor, or receive a signal input to the processor. The input/output interface may perform a sending action or a receiving action performed by the first SMF network element in any one of the first aspect or the possible implementations of the first aspect; or perform a sending action or a receiving action performed by the first SMF network element in any one of the second aspect or the possible implementations of the second aspect; or perform a sending action or a receiving action performed by the NRF network element in any one of the third aspect or the possible implementations of the third aspect; or perform a sending action or a receiving action performed by the NRF network element in any one of the fourth aspect or the possible implementations of the fourth aspect. Specifically, an output interface performs a sending action, and an input interface performs a receiving action.

In a possible implementation, the chip system may include a chip, or may include the chip and another discrete device.

According to an eighth aspect, a computer-readable storage medium is provided, configured to store a computer program. The computer program includes instructions used for implementing functions in any one of the first aspect or the possible implementations of the first aspect, or instructions used for implementing functions in any one of the second aspect or the possible implementations of the second aspect.

Alternatively, a computer-readable storage medium is configured to store a computer program.

When the computer program is executed by a computer, the computer is enabled to perform the method performed by the first SMF network element in any one of the first aspect or the possible implementations of the first aspect, or perform the method performed by the first SMF network element in any one of the second aspect or the possible implementations of the second aspect, or perform the method performed by the NRF network element in any one of the third aspect or the possible implementations of the third aspect, or perform the method performed by the NRF network element in any one of the fourth aspect or the possible implementations of the fourth aspect.

According to a ninth aspect, a computer program product is provided. The computer program product includes computer program code; and when the computer program code runs on a computer, the computer is enabled to perform the method performed by the first SMF network element in any one of the first aspect or the possible implementations of the first aspect, or perform the method performed by the first SMF network element in any one of the second aspect or the possible implementations of the second aspect, or perform the method performed by the NRF network element in any one of the third aspect or the possible implementations of the third aspect, or perform the method performed by the NRF network element in any one of the fourth aspect or the possible implementations of the fourth aspect.

According to a tenth aspect, a communication system is provided. The communication system includes the first SMF network element that performs the method according to any one of the first aspect or the possible implementations of the first aspect and the NRF network element that performs the method according to any one of the third aspect or the possible implementations of the third aspect. Alternatively, the communication system includes the first SMF network element that performs the method according to any one of the second aspect or the possible implementations of the second aspect and the NRF network element that performs the method according to any one of the fourth aspect or the possible implementations of the fourth aspect. For technical effects of the fifth aspect to the tenth aspect, refer to the descriptions of the first aspect to the fourth aspect. Details are not described again.

### BRIEF DESCRIPTION OF DRAWINGS

FIG. 1a is a schematic diagram of an architecture of a communication system according to an embodiment of this application;
FIG. 1b is a schematic diagram of an architecture of a communication system according to an embodiment of this application;
FIG. 1c is a schematic diagram of an architecture of a communication system according to an embodiment of this application;
FIG. 2 is a flowchart of a multicast session establishment procedure according to an embodiment of this application;
FIG. 3 is a flowchart of a communication process according to an embodiment of this application;
FIG. 4 is a flowchart of a communication process according to an embodiment of this application;
FIG. 5 is a flowchart of a communication process according to an embodiment of this application;
FIG. 6 is a diagram of a structure of a communication apparatus according to an embodiment of this application; and
FIG. 7 is a diagram of a structure of a communication apparatus according to an embodiment of this application.

### DESCRIPTION OF EMBODIMENTS

For ease of understanding of the technical solutions in embodiments of this application, the following briefly describes a system architecture of a method provided in embodiments of this application. It may be understood that the system architecture described in embodiments of this application is intended to more clearly describe the technical solutions in embodiments of this application, and does not constitute a limitation on the technical solutions provided in embodiments of this application.

The technical solutions in embodiments of this application may be applied to various communication systems, for example, a satellite communication system and a conventional mobile communication system. The satellite communication system may be integrated with the conventional mobile communication system (that is, a terrestrial communication system). For example, a communication system includes: a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5th generation, 5G) system or a new radio (new radio, NR) system, a 6th generation (6th generation, 6G) system, another future communication system, or the like. The communication system further supports a communication system integrating a plurality of wireless technologies, for example, may also be used in a system that integrates a non-terrestrial network (non-terrestrial network, NTN) and a terrestrial mobile communication network, for example, an uncrewed aerial vehicle, a satellite communication system, and high altitude platform station (high altitude platform station, HAPS) communication system.

For example, the following describes, by using only a fifth generation communication system as an example, an application scenario of embodiments of this application and the method in embodiments of this application.

In this application, a 5G communication system is used as an example for descriptions.

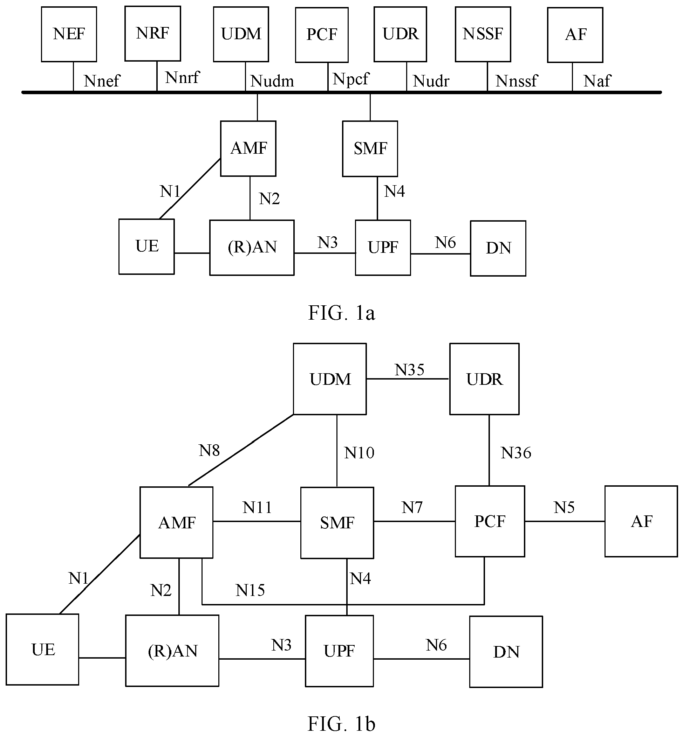

For example, FIG. 1a is a schematic diagram of an architecture of a 5G communication system to which this application is applicable. Specifically, FIG. 1a is a schematic diagram of an architecture of a 5G network based on a service-based architecture.

For example, FIG. 1b is a schematic diagram of another architecture of a 5G communication system to which this application is applicable. Specifically, FIG. 1b is a schematic diagram of a point-to-point-based 5G architecture. A main difference between FIG. 1a and FIG. 1b lies in that interfaces between network elements in FIG. 1a are service-based interfaces, while interfaces between network elements in FIG. 1b are point-to-point-based interfaces.

The architectures of the 5G networks shown in FIG. 1a and FIG. 1b may include a terminal device part, an access network part, and a core network part. Optionally, a data network (data network, DN) part and an application function (application function, AF) network element part are further included. The terminal accesses the core network through the access network, and the core network communicates with the DN or the AF. The following briefly describes functions of some network elements.

A terminal device (terminal device), which may also be referred to as user equipment (user equipment, UE), is a device having a wireless transceiver function, and may be deployed on land, including indoors or outdoors, and handheld or in-vehicle. Alternatively, the terminal device may be deployed on water (for example, on a steamship), or may be deployed in the air (for example, on an airplane, a balloon, or a satellite). The terminal device may be a mobile phone (mobile phone), a pad (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

A (R)AN device in this application is a device that provides a wireless communication function for the terminal device, and the (R)AN device is also referred to as an access network device. The RAN device in this application includes but is not limited to: a next generation NodeB (g NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmitting and receiving point (transmitting and receiving point, TRP), a transmitting point (transmitting point, TP), a mobile switching center, and the like in 5G. In systems using different radio access technologies, a device having a base station function may have different names. For example, in a 5th generation (5th generation, 5G) system, the device is referred to as a RAN or a gNB (5G NodeB). In an LTE system, the device is referred to as an evolved NodeB (evolved NodeB, eNB or eNodeB). In a 3rd generation (3rd generation, 3G) system, the device is referred to as a NodeB (NodeB) or the like.

A data network DN may have a plurality of deployed services, and may provide a terminal device with services such as a data service and/or a voice service. For example, the DN is a private network of a smart factory, a sensor installed in a workshop of the smart factory may be a terminal device, the sensor and a control server are deployed in the DN, and the control server may provide a service for the sensor. The sensor may communicate with the control server, to obtain instructions of the control server, transmit collected data of the sensor to the control server based on the instructions, and the like. For another example, the DN is an internal office network of a company, a mobile phone or a computer of an employee of the company may be a terminal device, and the mobile phone or the computer of the employee may access information, data resources, and the like on the internal office network of the company.

An application network element mainly supports interaction with a 3rd generation partnership project (3rd generation partnership project, 3GPP) core network to provide services, for example, affect a data routing decision, a policy control function, or provide some third-party services for a network side. In the 5G communication system, the application network element may be an application function (application function, AF) network element. In the future communication system, the application network element may still be the AF network element, or may have another name. This is not limited in this application.

The core network part may include one or more of the following network elements.

An access management network element is a control plane network element provided by an operator network, and is responsible for access control and mobility management, for example, including functions such as mobility status management, allocation of a temporary user identity, authentication, and user authorization that are for accessing the operator network by the terminal device. In the 5G communication system, the access management network element may be an access and mobility management function (access and mobility management function, AMF) network element. In the future communication system, the access management network element may still be the AMF network element, or may have another name. This is not limited in this application.

A session management network element is mainly responsible for session management in a mobile network, for example, session establishment, modification, and release. Specific functions may be, for example, allocating an IP address to a user and selecting a user plane network element that provides a packet forwarding function. In the 5G communication system, the session management network element may be a session management function (session management function, SMF) network element. In the future communication system, the session management network element may still be the SMF network element, or may have another name. This is not limited in this application.

A user plane network element is responsible for forwarding and reception of user data in the terminal device. The user data may be received from the data network, and is transmitted to the terminal device via an access network device. Alternatively, the user plane network element may receive the user data from the terminal device via the access network device, and forward the user data to the data network. Functions of transmitting resources and scheduling that are of the user plane network element and that provide a service for the terminal device are managed and controlled by the SMF network element. In the 5G communication system, the user plane network element may be a user plane function (user plane function, UPF) network element. In the future communication system, the user plane network element may still be the UPF network element, or may have another name. This is not limited in this application.

A data management network element is configured for generation of authentication credentials, user identification handling (for example, storage and management of permanent user identifiers), access control, subscription data management, and the like. In the 5G communication system, the data management network element may be a unified data management (unified data management, UDM) network element. In the future communication system, the unified data management network element may still be the UDM network element, or may have another name. This is not limited in this application.

A policy control network element mainly supports providing a unified policy framework to govern network behavior and providing policy rules to a control layer network function, and is responsible for accesses of user subscription information relevant for policy decisions. In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be the PCF network element, or may have another name. This is not limited in this application.

A network repository network element may be configured to provide a network element discovery function and provide, based on requests from other network elements, network element information corresponding to network element types. The NRF further provides a network element management service, for example, registration, update, and deregistration of a network element, and subscription and push of a network element status. In the 5G communication system, the network repository network element may be a network registration function (network repository function, NRF) network element. In the future communication system, the network repository network element may still be the NRF network element, or may have another name. This is not limited in this application.

A network exposure function network element may be configured to securely expose services, capabilities, and the like provided by a 3GPP network function device. In the 5G communication system, the network exposure function network element may be a network exposure function (network exposure function, NEF) network element. In the future communication system, the network exposure function network element may still be the NEF network element, or may have another name. This is not limited in this application.

A network slice selection network element may be configured to select an appropriate network slice for a service of a terminal. In the 5G communication system, the network slice selection network element may be a network slice selection function (network slice selection function, NSSF) network element. In the future communication system, the network slice selection function network element may still be the NSSF network element, or may have another name. This is not limited in this application.

A network data analytics network element may collect data from each network function (network function, NF), for example, a policy control network element, a session management network element, a user plane network element, an access management network element, and an application function network element (through a network capability exposure function network element), and perform analysis and prediction. In the 5G communication system, the network data analytics network element may be a network data analytics function (network data analytics function, NWDAF). In the future communication system, the network data analytics function network element may still be the NWDAF network element, or may have another name. This is not limited in this application.

A unified data repository network element is responsible for storing structured data information, including subscription information, policy information, and network data or service data defined in a standard format. In the 5G communication system, the unified data repository network element may be a unified data repository (unified data repository, UDR). In the future communication system, the unified data repository function network element may still be the UDR network element, or may have another name. This is not limited in this application.

It may be understood that the network elements may be network elements in a hardware device, and the functions may be software functions running on dedicated hardware, or may be virtualized functions instantiated on a platform (for example, a cloud platform). In a possible implementation, the network elements or the functions described above may be implemented by one device, may be implemented by a plurality of devices together, or may be implemented by one functional module in one device. This is not specifically limited in embodiments of this application. In addition, for ease of descriptions, "network element" may be omitted below. For example, in this application, an SMF network element and an SMF convey a same meaning. For ease of descriptions, the two words "network element" are omitted, and other omission is similar.

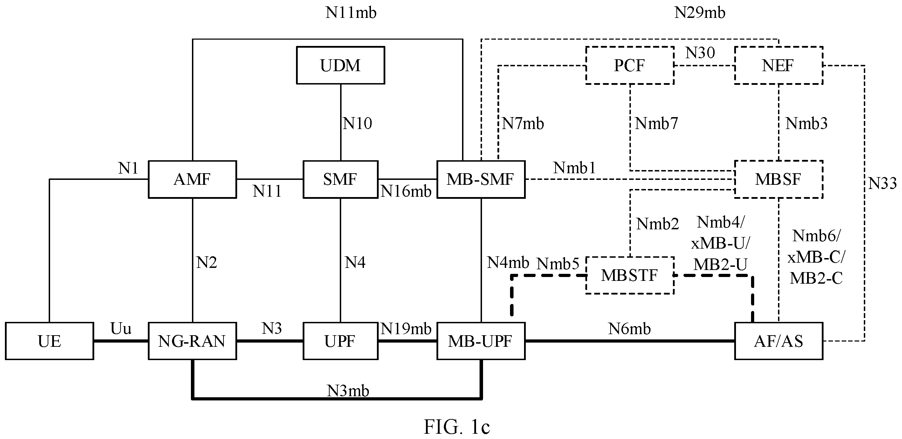

FIG. 1c is a schematic diagram of a system architecture of a multicast/broadcast service MBS in a fifth generation mobile communication system. In comparison with the system architecture in FIG. 1a, there are mainly the following differences.

An MB-SMF, an MB-UPF, and a multicast/broadcast service function (multicast/broadcast service function, MBSF) network element are newly added. The MB-SMF is configured for multicast session configuration, the MB-UPF is configured for multicast data transmission, and the MBSF is configured for multicast/broadcast service MBS requirement configuration between an AF and the MB-SMF. The MB-UPF is configured by the MB-SMF and is connected to an AF/AS (which may include a content provider) through a N6 interface to obtain multicast data. The MB-UPF is also connected to an NG-RAN through a N3 interface to send downlink multicast data to a RAN. The MBSF mainly initiates, based on a multicast service requirement of the AF/AS, a multicast session establishment/management requirement to the MB-SMF, and performs related configuration.

For ease of understanding embodiments of this application, the following describes application scenarios in this application. Network architectures and service scenarios described in embodiments of this application are intended to more clearly describe the technical solutions in embodiments of this application, and do not constitute any limitation on the technical solutions provided in embodiments of this application. A person of ordinary skill in the art may learn that, with emergence of new service scenarios, the technical solutions provided in embodiments of this application are also applicable to similar technical problems.

In a multicast service, an MBS session configuration procedure (session configuration procedure) and an MBS session establishment procedure (session establishment procedure) are included.

In an example, an application function AF network element may initiate the MBS session configuration procedure. For example, the AF sends an allocation request of a temporary mobile group identity (temporary mobile group identity, TMGI) to a core network element (for example, a network exposure function NEF network element or a multicast/broadcast service function MBSF network element). The TMGI identifies an MBS session. Then, the core network element (for example, the NEF/MBSF) performs authorization verification on the AF, and exposes an MBS session configuration permission only to an AF that satisfies the authorization verification.

In another example, an MB-SMF may initiate the MBS session configuration procedure. This scenario is usually used for supporting a multicast service without an AF, or supporting a multicast service for which an AF does not initiate the MBS session configuration procedure. In the scenario, an operator may preconfigure some pieces of default quality of service (quality of service, QoS) information and the like for the multicast service. When a unicast SMF detects a request of UE for joining the multicast service, the unicast SMF sends an information query request to the MB-SMF, and then the MB-SMF initiates the MBS session configuration procedure.

This application mainly focuses on an MBS session establishment procedure. For an MBS session configuration procedure, details are not described again.

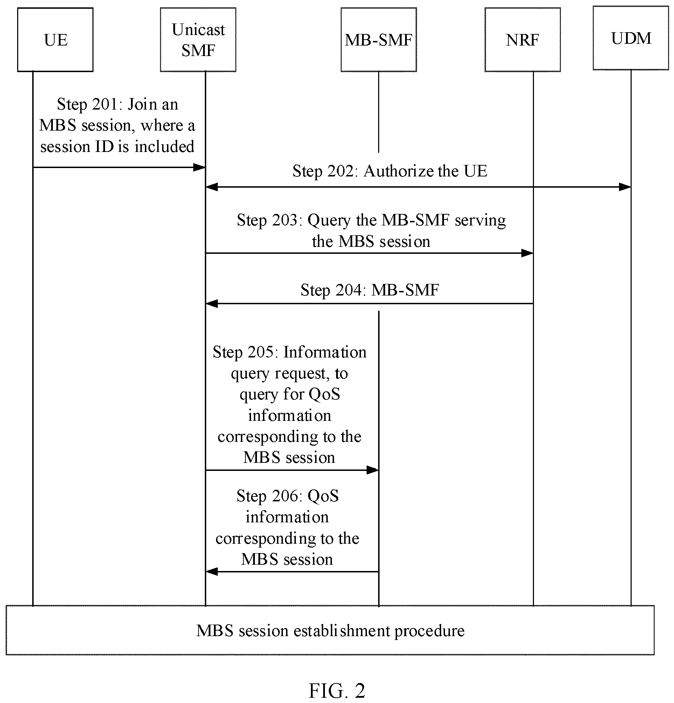

FIG. 2 is a schematic diagram of a communication process.

Step 201: UE sends a request message for joining an MBS session to a unicast SMF, where the message includes an MBS session ID.

For example, if the MBS session ID is a multicast address (for example, an IP multicast address), it indicates that the UE requests to join a multicast session corresponding to the multicast address. For example, the UE sends, in a form of a protocol data unit (protocol data unit, PDU) session modification request message, the request message for joining the MBS session to the unicast SMF by using an N1 message and an established unicast session. The request message includes the MB S session ID.

Step 202: Perform UE authorization (UE authorization).

For example, the unicast SMF sends an authorization request for the UE to a unified data management UDM network element, verifies subscription information of the UE, and determines whether the UE can use a multicast service. When it is determined that the UE can use the multicast service, a subsequent step is performed.

Step 203: If the unicast SMF finds that context information of the MBS session does not exist locally, it indicates that the unicast SMF has not established an association with the MBS session. In this case, the unicast SMF queries an NRF for an MB-SMF corresponding to the MBS session. It is also understood as that the NRF is queried for an MB-SMF serving the MBS session.

Step 204: The NRF feeds back the MB-SMF to the unicast SMF.

For example, if the NRF finds the MB-SMF currently serving the MBS session, the NRF may feed back the MB-SMF currently serving the MBS session to the unicast SMF. If the NRF does not find the MB-SMF currently serving the MBS session, the NRF selects one or more MB-SMFs based on slice information and the like, and feeds back the MB-SMF to the unicast SMF.

The "feeding back the MB-SMF" herein may be feeding back entity information of the MB-SMF based on registration information of the MB-SMF. The entity information may be a part of the registration information.

Step 205: The unicast SMF sends an information query request to the MB-SMF, to perform query for related information about the MBS session, where the query request includes the MBS session ID.

For example, the related information is information such as quality of service QoS corresponding to the MBS session.

After receiving the information query request, the MB-SMF may query whether the context information of the MBS session exists locally. If the context information of the MBS session does not exist locally, it indicates that the multicast session has not been configured for the multicast address, and the MB-SMF may initiate an MBS session configuration procedure.

Step 206: The MB-SMF feeds back the related information about the MBS session, for example, QoS information, to the unicast SMF.

Next, an MBS session establishment procedure (session establishment procedure) may be performed. For example, the following procedure is performed.

The unicast SMF feeds back the context information corresponding to the MBS session to a RAN via an AMF, and determines to add the UE to the multicast session.

The RAN initiates, depending on whether the RAN can receive downlink data of the multicast session, the MBS session establishment procedure to establish a downlink data path from a content provider to the RAN.

The RAN notifies the UE that the UE successfully joins a group and allocates transmission resources on a RAN side.

The RAN reports, to the unicast SMF, an execution status of joining the multicast group by the UE. The unicast SMF records and adjusts context information related to the UE.

In the example in FIG. 2, authorization verification is performed only on whether the UE can use the multicast service (for example, step 202), and authorization verification is not performed on the multicast service (which may also be understood as a multicast address requested by the terminal device). Consequently, if the multicast address that the UE requests to join is not within a proper range (for example, a range allowed by an operator), the MB-SMF still performs a session configuration procedure for the multicast service. Network elements related to the session configuration procedure, such as the MB-SMF and an MB-UPFUE, reserve resources for the multicast service. However, because the multicast address is unauthorized, the operator cannot provide a multicast service for the multicast address. Consequently, context occupation and a waste of resources are caused. If unauthorized UE uses this mechanism to launch DDoS attacks, a normal multicast service may also be unavailable.

Based on this, this application provides a plurality of solutions to perform authorization verification on the multicast service, to avoid a waste of resources or illegal attacks.

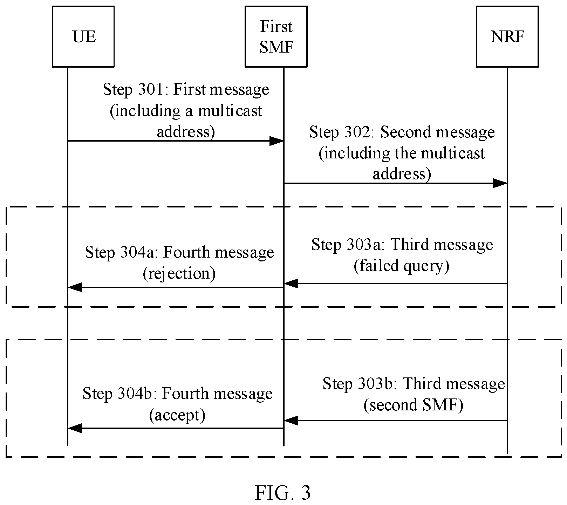

FIG. 3 is a flowchart of a communication method, including the following steps.

It should be noted that a first SMF network element in this application is a unicast SMF network element, and a second SMF network element is an MB-SMF network element. An SMF that establishes a multicast session for a multicast service corresponding to a multicast address may also be an MB-SMF. An SMF that supports establishment of the multicast session for the multicast service may also be an MB-SMF.

Step 301: A terminal device sends a first message to a first SMF network element, and correspondingly, the first SMF network element receives the first message from the terminal device.

The first message includes a multicast address. The first message indicates that the terminal device requests to join a multicast session corresponding to the multicast address.

Step 302: The first SMF network element sends a second message to a network registration function NRF network element, and correspondingly, the network registration function NRF network element receives the second message from the first SMF network element.

The second message includes the multicast address. The second message is used to query for an SMF that establishes a multicast session for a multicast service corresponding to the multicast address.

It should be noted that in a conventional technology, when query is performed for the SMF serving the multicast service corresponding to the multicast address (for example, query is performed for the MB-SMF in step 203), a session establishment scenario and a session configuration scenario are not distinguished. However, in this application, the second message is different from an existing query message. A multicast session establishment scenario and a multicast session configuration scenario may be distinguished by using the second message in this application. In this way, the NRF may perform, based on different scenarios, actions corresponding to the different scenarios. In the solution in FIG. 3, the NRF may distinguish, by using the second message, that an SMF to be queried for in a current scenario is for multicast session establishment, but not for multicast session configuration.

The second message may be a new message, or may be obtained by improving an existing message. In an optional example, the second message may further include a first indication, where the first indication indicates multicast session establishment. In this way, an existing message is improved by including new indication information in the existing message to indicate the multicast session establishment scenario. Universality is high.

For the NRF network element, the SMF that establishes the multicast session for the multicast service corresponding to the multicast address may be found. In this case, after step 302, step 303a and step 304a may be performed. Alternatively, the SMF that establishes the multicast session for the multicast service corresponding to the multicast address may not be found. In this case, after step 302, step 303b and step 304b may be performed. The foregoing cases are described below by using Embodiment 1 and Embodiment 2 respectively.

Embodiment 1: The SMF that establishes the multicast session for the multicast service corresponding to the multicast address is not found.

Step 303a: The NRF network element sends a third message to the first SMF network element, and correspondingly, the first SMF network element receives the third message from the NRF. The third message indicates that the SMF that establishes the multicast session for the multicast service corresponding to the multicast address is not found.

In an optional example, the third message includes a second indication, where the second indication indicates that the query fails. The second indication may occupy one bit. For example, 0 indicates that the query fails, and 1 indicates that the query succeeds. Indication information is used for indication, so that occupied bits can be reduced, and resources can be reduced.

In an optional example, the third message includes an empty SMF list. The empty SMF list may be an empty list having a table header form. When including the empty SMF list, the third message may inherit a format of an existing message, so that universality is high.

In an optional example, the third message includes the second indication and the empty SMF list. The second indication and/or the empty SMF list indicates that the SMF that establishes the multicast session for the multicast service corresponding to the multicast address is not found.

In an optional example, a message name of the third message indicates that the SMF that establishes the multicast session for the multicast service corresponding to the multicast address is not found.

The NRF network element may indicate, to the first SMF network element in the following cases, that the SMF that establishes the multicast session for the multicast service corresponding to the multicast address is not found.

Case 1a: An allowed multicast address of an SMF that supports establishment of the multicast session for the multicast service does not include the multicast address.

Case 2a: An SMF currently serving the multicast service corresponding to the multicast address does not exist, and an allowed multicast address of an SMF that supports establishment of the multicast session for the multicast service does not include the multicast address.

It should be noted that, for any multicast address, if an SMF serving a multicast service corresponding to the any multicast address is selected based on a condition that an allowed multicast address of the SMF needs to include the any multicast address, the SMF currently serving the multicast service corresponding to the multicast address is definitely one of SMFs whose allowed multicast addresses include the multicast address.

If an SMF serving a multicast service corresponding to the any multicast address is selected based on a condition that an allowed multicast address of the SMF includes the any multicast address or another condition (for example, based on slice selection or AF selection), the SMF currently serving the multicast service corresponding to the multicast address may be or may not be any one of SMFs whose allowed multicast addresses include the multicast address.

Based on this, if the SMF currently serving the multicast service corresponding to the multicast address is definitely one of the SMFs whose allowed multicast addresses include the multicast address, provided that the allowed multicast address of the SMF that supports establishment of the multicast session for the multicast service does not include the multicast address, it may be determined that the SMF currently serving the multicast service corresponding to the multicast address does not exist, and it is unnecessary to repeatedly determine whether the SMF currently serving the multicast service corresponding to the multicast address exists.

If the SMF currently serving the multicast service corresponding to the multicast address may be or may not be any one of the SMFs whose allowed multicast addresses include the multicast address, it may be first determined whether the SMF currently serving the multicast service corresponding to the multicast address exists. When the SMF currently serving the multicast service corresponding to the multicast address does not exist, it is then determined whether the allowed multicast address of the SMF that supports establishment of the multicast session for the multicast service includes the multicast address.

In addition, an SMF that establishes the multicast session for the multicast service may report the allowed multicast address of the SMF to the NRF network element. Correspondingly, the NRF network element may receive the allowed multicast address of the SMF that supports establishment of the multicast session for the multicast service. In this way, the NRF network element may determine whether the allowed multicast address of the SMF that supports establishment of the multicast session for the multicast service includes the multicast address requested by the terminal device. When the allowed multicast address does not include the multicast address requested by the terminal device, the terminal device may be rejected to join the multicast session corresponding to the multicast address.

The allowed multicast address of the SMF may be configured by an operator for the SMF.

Case 3a: An allowed multicast address of an operator does not include the multicast address. The NRF may query whether the allowed multicast address of the operator includes the multicast address requested by the terminal device.

For example, the operator may configure the allowed multicast address of the operator in the NRF. For example, the NRF network element receives the allowed multicast address of the operator. In this way, the NRF network element may locally query whether the multicast address belongs to the allowed multicast address of the operator. In Case 3a, the allowed multicast address of the operator does not include the multicast address requested by the terminal device.

For another example, the operator may configure the allowed multicast address in a unified data repository UDR. The NRF queries, from the unified data repository UDR network element, whether the multicast address belongs to the allowed multicast address of the operator. In Case 3a, the allowed multicast address of the operator does not include the multicast address requested by the terminal device.

In an optional example, Case 3a may be further limited. An SMF currently serving the multicast service corresponding to the multicast address does not exist, and the allowed multicast address of the operator does not include the multicast address. The NRF network element indicates, to the first SMF network element, that the SMF that establishes the multicast session for the multicast service corresponding to the multicast address is not found.

Step 304a: The first SMF network element sends a fourth message to the terminal device, where the fourth message indicates that the terminal device is rejected to join the multicast session corresponding to the multicast address.

In conventional technologies, when the SMF currently serving the multicast service corresponding to the multicast address does not exist, the NRF selects one MB-SMF based on slice information and the like and feeds back the MB-SMF to the first SMF, for multicast session establishment/configuration. However, in Embodiment 1, the NRF may distinguish, by using the second message, that the SMF to be queried for in the current scenario is for multicast session establishment, but not multicast session configuration. In the multicast session establishment scenario, the SMF network element may perform authorization verification on the multicast service. When the authorization verification fails, the SMF network element sends, to the terminal device, indication information indicating that the joining is rejected, to avoid a waste of resources of the terminal device. In addition, during the authorization verification, the SMF network element queries the NRF network element for an appropriate SMF, and determines, based on a query result, whether the authorization verification succeeds. If the NRF network element does not allocate an SMF to the first SMF network element for multicast session establishment, the authorization verification fails. Not allocating an SMF can avoid a waste of resources and illegal attacks can be avoided.

Embodiment 2: The SMF that establishes the multicast session for the multicast service corresponding to the multicast address is found.

Step 303b: The NRF network element sends a third message to the first SMF network element, and correspondingly, the first SMF network element receives the third message from the NRF. The third message includes information of a second SMF. The second SMF supports establishment of the multicast session for the multicast service corresponding to the multicast address.

The NRF network element may indicate the second SMF to the first SMF network element in the following cases.

Case 1b: An SMF currently serving the multicast session corresponding to the multicast address exists.

When the SMF currently serving the multicast address exists, the SMF currently serving the multicast address is determined as the second SMF. In other words, the second SMF is the SMF currently serving the multicast session corresponding to the multicast address.

In an optional example, Case 1b may be further limited. The SMF currently serving the multicast service corresponding to the multicast address exists, and an allowed multicast address of an operator includes the multicast address. The NRF network element indicates the second SMF to the first SMF network element.

Case 2b: An allowed multicast address of an SMF that supports establishment of the multicast session for the multicast service includes the multicast address.

The NRF network element may first determine whether an SMF currently serving the multicast service corresponding to the multicast address exists. When the SMF currently serving the multicast service corresponding to the multicast address does not exist, it is then determined whether the allowed multicast address of the SMF that supports establishment of the multicast session for the multicast service includes the multicast address. If an allowed multicast address of an SMF that supports establishment of the multicast session for the multicast service includes the multicast address requested by the terminal device, the SMF may be determined as the second SMF. In other words, when the SMF currently serving the multicast address does not exist, the SMF whose allowed multicast address includes the multicast address may be determined as the second SMF. In this case, an allowed multicast address of the second SMF includes the multicast address.

In addition, the SMF (including the second SMF) that establishes the multicast session for the multicast service may report the allowed multicast address of the SMF to the NRF network element. Correspondingly, the NRF network element may receive the allowed multicast address of the SMF (including the second SMF) that supports establishment of the multicast session for the multicast service. In this way, the NRF network element may determine whether the allowed multicast address of the SMF (including the second SMF) that supports establishment of the multicast session for the multicast service includes the multicast address requested by the terminal device. When the allowed multicast address includes the multicast address requested by the terminal device, the SMF whose allowed multicast address includes the multicast address may be notified to the first SMF.

The allowed multicast address of the SMF may be configured by an operator for the SMF.

Case 3b: When an SMF currently serving the multicast service corresponding to the multicast address does not exist, and the multicast address belongs to an allowed multicast address of an operator, the NRF network element configures the SMF that establishes the multicast session for the multicast service corresponding to the multicast address. Further, the third message is sent to the first SMF network element, where the third message includes information of the second SMF.

In an optional example, the NRF network element may first determine whether the SMF currently serving the multicast service corresponding to the multicast address exists. When the SMF currently serving the multicast service corresponding to the multicast address exists, the SMF currently serving the multicast address may be determined as the second SMF. This corresponds to Case 1b.

When the SMF currently serving the multicast service corresponding to the multicast address does not exist, whether the allowed multicast address of the operator includes the multicast address requested by the terminal device may be further queried. If the multicast address belongs to the allowed multicast address of the operator, the NRF network element configures the SMF that establishes the multicast session for the multicast service corresponding to the multicast address.

In an optional example, the NRF network element may first query whether the allowed multicast address of the operator includes the multicast address requested by the terminal device. If the allowed multicast address of the operator does not include the multicast address requested by the terminal device, this case corresponds to Case 3a. If the allowed multicast address of the operator includes the multicast address requested by the terminal device, it may be further determined whether the SMF currently serving the multicast service corresponding to the multicast address exists.

For example, the operator may configure the allowed multicast address in the NRF. For example, the NRF network element receives the allowed multicast address of the operator. In this way, the NRF network element may locally query whether the multicast address belongs to the allowed multicast address of the operator. In Case 3b, the allowed multicast address of the operator includes the multicast address requested by the terminal device.

For another example, the operator may configure the allowed multicast address in a unified data repository UDR. The NRF queries, from the unified data repository UDR network element, whether the multicast address belongs to the allowed multicast address of the operator. In Case 3b, the allowed multicast address of the operator includes the multicast address requested by the terminal device.

Step 304b: The first SMF network element sends a fourth message to the terminal device, where the fourth message indicates that the terminal device is accepted to join the multicast session corresponding to the multicast address.

In conventional technologies, when the SMF currently serving the multicast service corresponding to the multicast address does not exist, the NRF selects one MB-SMF based on slice information and the like and feeds back the MB-SMF to the first SMF, for multicast session establishment/configuration. However, in Embodiment 2, the NRF may distinguish, by using the second message, that the SMF to be queried for in the current scenario is for multicast session establishment, but not multicast session configuration. In the multicast session establishment scenario, the SMF network element may perform authorization verification on the multicast service. When the authorization verification succeeds, the SMF network element sends, to the terminal device, indication information indicating that the joining is allowed. In addition, during the authorization verification, the SMF network element queries the NRF network element for an appropriate SMF, and determines, based on a query result, whether the authorization verification succeeds. If the NRF network element allocates an SMF to the first SMF network element for multicast session establishment, the authorization verification succeeds. In this way, a multicast service is properly provided for the terminal device.

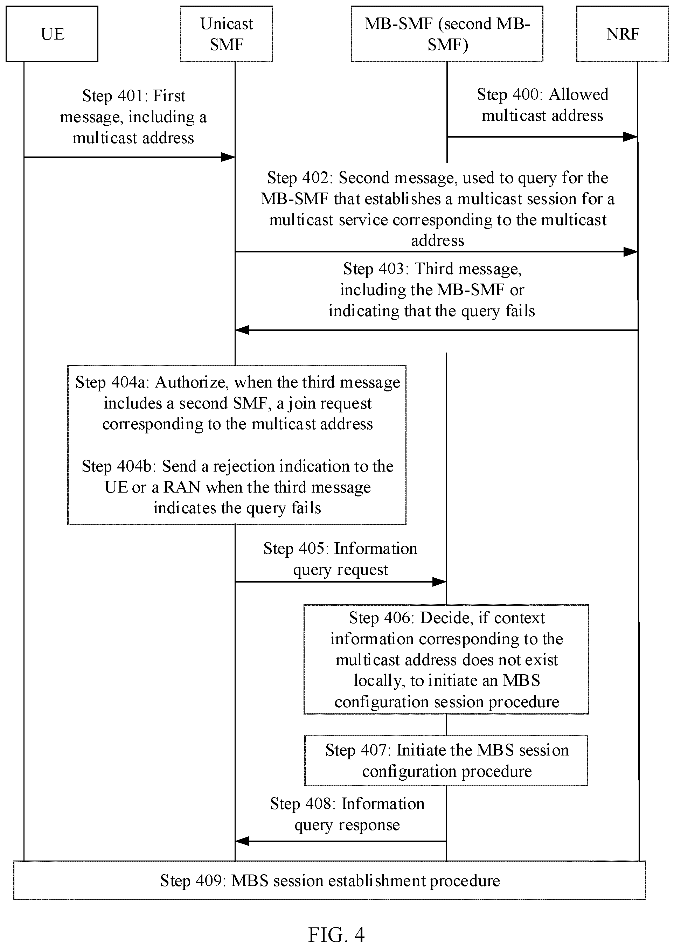

FIG. 4 is a flowchart of a communication method. In this example, an SMF that supports establishment of a multicast session for a multicast service reports an allowed multicast address of the SMF to an NRF. This may be applicable to Case 1a, Case 2a, Case 1b, Case 2b, and the like.

It should be noted that a first SMF network element in this application is a unicast SMF network element, and a second SMF network element is an MB-SMF network element. An SMF that establishes a multicast session for a multicast service corresponding to a multicast address may also be an MB-SMF. An SMF that supports establishment of the multicast session for the multicast service may also be an MB-SMF.

Step 400: An SMF that supports establishment of a multicast session for a multicast service (for ease of understanding, the SMF that supports establishment of the multicast session for the multicast service is referred to as an MB-SMF in the following) reports an allowed multicast address of the MB-SMF to an NRF. Correspondingly, the NRF network element receives the allowed multicast address of the MB-SMF.

The MB-SMF may report the allowed multicast address of the MB-SMF when a network function profile is created (NF profile create), or may report the allowed multicast address of the MB-SMF when a network function profile is updated (NF profile update). For example, when the MB-SMF creates or updates an NF profile of the MB-SMF at the NRF, the NF profile includes the allowed multicast address of the MB-SMF.

The allowed multicast address may be preconfigured by an operator for the MB-SMF, and the MB-SMF may serve a multicast service corresponding to a preconfigured multicast address.

There may be one or more allowed multicast addresses, or a quantity of allowed multicast addresses may be a range. The allowed multicast address may be reported to the NRF in a list form.

For example, the multicast address is an IP multicast address.

Step 401: A terminal device sends a first message to a first SMF network element, and correspondingly, the first SMF network element receives the first message from the terminal device.

The first message includes a multicast address. The first message indicates that the terminal device requests to join a multicast session corresponding to the multicast address.

The first message may be a request (request), for example, an MBS session join request (MBS session Join Request).

For example, when detecting that an application layer sends a message such as an internet group management protocol (internet group management protocol, IGMP) join message of a multicast address, UE sends the MBS session join request (MBS session Join Request) to the first SMF. The request includes the multicast address.

For example, the UE sends, in a form of a PDU session modification request message, the MBS session join request (MB Session Join Request) to the first SMF by using an N1 message and an established unicast session.

Optionally, UE authorization (UE authorization) may be performed. For example, the first SMF sends an authorization request for the UE to a unified data management UDM network element, verifies subscription information of the UE, and determines whether the UE can use a multicast service. When it is determined that the UE can use the multicast service, a subsequent step is performed. Alternatively, the step may not be performed.

Step 402: The first SMF network element sends a second message to the network registration function NRF network element, and correspondingly, the network registration function NRF network element receives the second message from the first SMF network element.

The second message includes the multicast address. The second message is used to query for an SMF that establishes a multicast session for a multicast service corresponding to the multicast address.

It should be noted that the query is performed for the SMF that establishes the multicast session for the multicast service corresponding to the multicast address rather than an SMF that configures a multicast session for the multicast service corresponding to the multicast address.

The first SMF may first query whether context information corresponding to the multicast address exists locally. If the context information corresponding to the multicast address does not exist locally, it indicates that the first SMF has not established an association with the multicast address. In this case, the first SMF may query, by using the multicast address, the NRF for the SMF that establishes the multicast session for the multicast service corresponding to the multicast address. The second message may be a request (request), for example, a network function discovery request (Nnrf NF Discovery request) of a service-based interface.

The second message may be a new message, or may be obtained through improvement on an existing message. For example, an existing network function discovery request (NF Discovery request) is improved. For example, a session establishment indication (session Establishment indication), namely, the first indication described above, is added to the existing network function discovery request (NF Discovery request), to indicate establishment of the multicast session. Step 403: The NRF network element sends a third message to the first SMF network element, and correspondingly, the first SMF network element receives the third message from the NRF.

The third message indicates that the SMF that establishes the multicast session for the multicast service corresponding to the multicast address is not found. Alternatively, the third message includes information of a second SMF (MB-SMF instance). The second SMF supports establishment of the multicast session for the multicast service corresponding to the multicast address.

It may also be understood as that, the NRF performs MS-SMF profile query for an unconfigured MBS session (MS-SMF profile query for unconfigured MBS session).

The NRF may perform query for a profile (profile) of the MB-SMF. The profile records an allowed multicast address of each MB-SMF.

If an SMF currently serving the multicast service corresponding to the multicast address is not found, query may be performed for the multicast address in the allowed multicast address of the MB-SMF. If the allowed multicast address of the MB-SMF does not include the multicast address (which may also be understood as that an MB-SMF allowed to serve the multicast service corresponding to the multicast address does not exist), the NRF no longer allocates an MB-SMF to the multicast service corresponding to the multicast address, and the NRF may feed back, to the first SMF, that the SMF that establishes the multicast session for the multicast service corresponding to the multicast address is not found. That the SMF that establishes the multicast session for the multicast service corresponding to the multicast address is not found, for example, may be that the query fails or a query result is an empty MB-SMF list.

If the SMF currently serving the multicast service corresponding to the multicast address is found, the NRF may feed back, to the first SMF, related information about the SMF that is serving the multicast service corresponding to the multicast address. If the multicast address is found in the allowed multicast address of the MB-SMF, the NRF may feed back the SMF whose allowed multicast address includes the multicast address (which may also be understood as the MB-SMF allowed to serve the multicast service corresponding to the multicast address) to the first SMF. When the multicast address is found in allowed multicast addresses of a plurality of MB-SMFs, one MB-SMF may be fed back to the first SMF, or the plurality of MB-SMFs may be fed back to the first SMF. For example, an entity list of the MB-SMFs is sent to the SMF.

The third message may be a response (response), for example, a network function discovery response (Nnrf NF Discovery response) of the service-based interface.

It should be noted that, the second message is used to query for the SMF that configures the multicast session for the multicast service corresponding to the multicast address, a processing process of the NRF is not limited in this application.

Next, the first SMF performs a corresponding action by using the third message fed back by the NRF.

Step 404a: If the third message includes information of the second SMF, when determining that the NRF finds an SMF that may establish the multicast session for the multicast service corresponding to the multicast address, the first SMF authorizes a join request corresponding to the multicast address (UE joining being allowed).

Optionally, when the third message includes information of a plurality of second SMFs, the first SMF may further select an MB-SMF.

Step 404b: If the third message indicates that the SMF that establishes the multicast session for the multicast service corresponding to the multicast address is not found, a join request corresponding to the multicast address is rejected. Subsequently, the first SMF may send, to the UE or an access network device, indication information indicating that the terminal device is rejected to join the multicast session corresponding to the multicast address.

Step 405: The first SMF sends an information query request to the second SMF, and correspondingly, the second SMF receives the information query request from the first SMF. The information query request is used to query for related information about establishing the multicast session corresponding to the multicast address, for example, QoS information. The information query request includes the multicast address.

For example, the information query request may be an Nmbsmf information request, where N represents a service-based interface Nnrf, and mbsmf represents an MB-SMF.

Step 406: The second SMF queries whether the context information of the multicast address exists locally. If the context information of the multicast address does not exist locally, it indicates that the multicast session has not been configured for the multicast address. The second SMF may decide to initiate a multicast session (decide to configure MBS Session).

Step 407: The second SMF initiates the MBS session configuration procedure, to configure the multicast session corresponding to the multicast address.

Step 408: After completing the multicast session configuration, the second SMF feeds back an information query response to the first SMF.

The information query response may be, for example, an Nmbsmf information response.

The information query response may include the QoS information.

Step 409: Multicast session establishment procedure (session establishment procedure).

In the example in FIG. 4, when performing registration with the NRF or performing update at the NRF, the MB-SMF notifies the NRF of a range of the allowed multicast address of the MB-SMF. In addition, a multicast session establishment scenario and a multicast session configuration scenario may be distinguished by using the second message. When the second message is used for multicast session establishment, the NRF preferentially queries for, when querying for an MB-SMF entity, an MB-SMF currently serving the multicast service corresponding to the multicast address. If the MB-SMF currently serving the multicast service corresponding to the multicast address is not found, query may be performed for the multicast address in the allowed multicast address of the MB-SMF (in other words, query is performed for the MB-SMF allowed to serve the multicast service corresponding to the multicast address). If both of the MB-SMFs are not found, an indication indicating that the query fails is replied to the first SMF. In comparison with conventional technologies, when the second message is used for multicast session establishment, a message for a failed query may be fed back, and no new MB-SMF is allocated. In this way, an unauthorized request may be identified based on the indication indicating that the query fails. For other query requests for multicast session establishment, for example, when performing query, an AF/NEF/MBSF allocates a new MB-SMF based on other information such as slices and DNNs when finding that no MB-SMF is available based on existing normal logic.

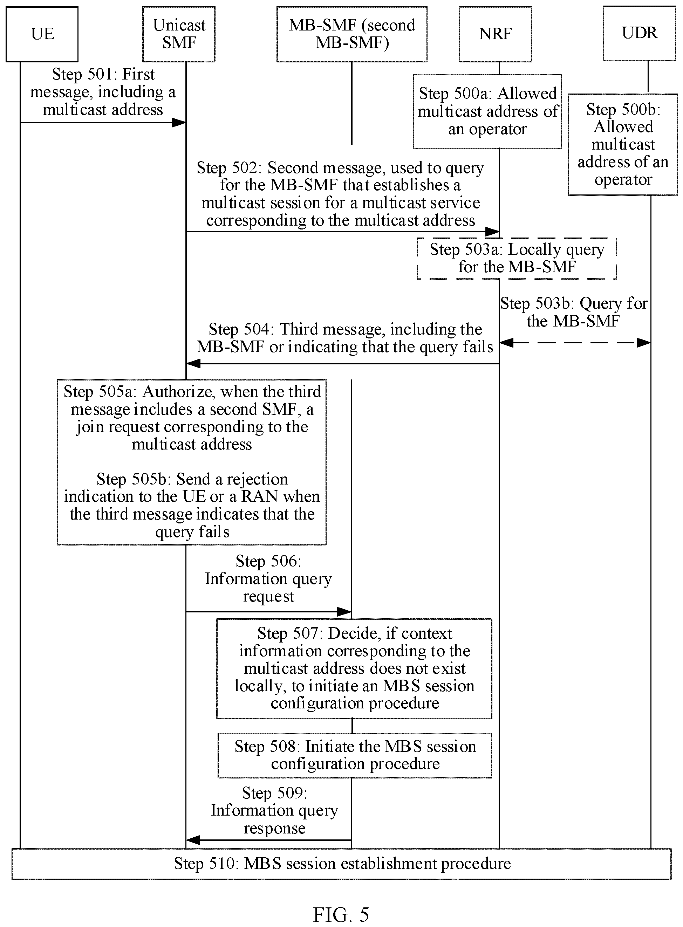

FIG. 5 is a flowchart of a communication method. In this example, an operator configures an allowed multicast address for an NRF. This may be applicable to the foregoing case 3a, case 3b, and the like.

It should be noted that a first SMF network element in this application is a unicast SMF network element, and a second SMF network element is an MB-SMF network element. An SMF that establishes a multicast session for a multicast service corresponding to a multicast address may also be an MB-SMF. An SMF that supports establishment of the multicast session for the multicast service may also be an MB-SMF.

Step 500a: Operators send allowed multicast addresses of the operators to an NRF, where these allowed multicast addresses may support a multicast session configuration procedure triggered by UE join.

Step 500b: Operators send allowed multicast addresses of the operator to a UDR, where these allowed multicast addresses may support a multicast session configuration procedure triggered by the UE join.

Step 501: A terminal device sends a first message to a first SMF network element, and correspondingly, the first SMF network element receives the first message from the terminal device.

The first message includes a multicast address. The first message indicates that the terminal device requests to join a multicast session corresponding to the multicast address.

Step 501 is the same as step 401, and details are not described again.

Step 502: The first SMF network element sends a second message to a network registration function NRF network element, and correspondingly, the network registration function NRF network element receives the second message from the first SMF network element.

The second message includes the multicast address. The second message is used to query for an SMF that establishes a multicast session for a multicast service corresponding to the multicast address.

Step 502 is the same as step 402, and details are not described again.

Step 503a: The NRF network element locally queries whether the multicast address belongs to the allowed multicast address of the operator.

Step 503b: The NRF network element queries, from a unified data repository UDR network element, whether the multicast address belongs to the allowed multicast address of the operator. Either step 503a or step 503b may be performed, or both may be performed.

For example, after receiving the second message, the NRF network element may query, from the UDR, whether the multicast address belongs to the allowed multicast address of the operator. Optionally, after receiving the second message, the NRF network element may first query whether an SMF currently serving the multicast service corresponding to the multicast address exists. If the SMF currently serving the multicast service corresponding to the multicast address is not found, the NRF queries, from the UDR, whether the multicast address belongs to the allowed multicast address of the operator.

Step 504: The NRF network element sends a third message to the first SMF network element, and correspondingly, the first SMF network element receives the third message from the NRF.

The third message indicates that the SMF that establishes the multicast session for the multicast service corresponding to the multicast address is not found. Alternatively, the third message includes information of a second SMF (MB-SMF instance), and the second SMF supports establishment of the multicast session for the multicast service corresponding to the multicast address. If the multicast address does not belong to the allowed multicast address of the operator, the NRF no longer allocates an MB-SMF to the multicast service corresponding to the multicast address, and the NRF may feed back, to the first SMF, that the SMF that establishes the multicast session for the multicast service corresponding to the multicast address is not found. The SMF that establishes the multicast session for the multicast service corresponding to the multicast address is not found, for example, may be that the query fails or a query result is an empty MB-SMF list.

If the SMF currently serving the multicast service corresponding to the multicast address is found, the NRF may feed back, to the first SMF, related information about the SMF that is serving the multicast service corresponding to the multicast address.

If it is found that the multicast address belongs to the allowed multicast address of the operator, the NRF network element configures an SMF that establishes the multicast session for the multicast service corresponding to the multicast address. Further, the third message is sent to the first SMF network element, where the third message includes information of the second SMF. The third message may be a response (response), for example, a network function discovery response (Nnrf NF Discovery response) of the service-based interface.

It should be noted that, if the second message is used for perform query for the SMF that configures the multicast session for the multicast service corresponding to the multicast address, a processing process of the NRF is not limited in this application.

Next, the first SMF performs a corresponding action by using the third message fed back by the NRF.

Step 505a described below is the same as step 404a, step 505b is the same as step 404b, and step 506 to step 510 are the same as step 405 to step 409.

Step 505a: If the third message includes information of the second SMF, when determining that the NRF finds an SMF that may establish the multicast session for the multicast service corresponding to the multicast address, the first SMF authorizes a join request corresponding to the multicast address (UE joining being allowed).

Optionally, when the third message includes information of a plurality of second SMFs, the first SMF may further select an MB-SMF.

Step 505b: If the third message indicates that the SMF that establishes the multicast session for the multicast service corresponding to the multicast address is not found, a join request corresponding to the multicast address is rejected. Subsequently, the first SMF may send, to the UE or an access network device, indication information indicating that the terminal device is rejected to join the multicast session corresponding to the multicast address.

Step 506: The first SMF sends an information query request to the second SMF, and correspondingly, the second SMF receives the information query request from the first SMF. The information query request is used to query for related information about establishing the multicast session corresponding to the multicast address, for example, QoS information. The information query request includes the multicast address.

For example, the information query request may be an Nmbsmf information request, where N represents a service-based interface Nnrf, and mbsmf represents an MB-SMF.

Step 507: The second SMF queries whether the context information of the multicast address exists locally. If the context information of the multicast address does not exist locally, it indicates that the multicast session has not been configured for the multicast address. The second SMF may decide to initiate multicast session configuration (decide to Configuration MBS Session).

Step 508: The second SMF initiates the MBS session configuration procedure, to configure the multicast session corresponding to the multicast address.

Step 509: After completing the multicast session configuration, the second SMF feeds back an information query response to the first SMF.

The information query response may be, for example, an Nmbsmf information response.

The information query response may include the QoS information.

Step 510: Multicast session establishment procedure (session establishment procedure).

In the example in FIG. 5, the operator configures a range of the allowed multicast address of the operator for the NRF or the UDR. In addition, the second message may distinguish a multicast session establishment scenario from a multicast session configuration scenario. When the second message is used for multicast session establishment, and when the NRF performs query for the MB-SMF entity, an MB-SMF currently serving the multicast service corresponding to the multicast address does not exist. In addition, if the multicast address is not included in the allowed multicast address of the operator, an indication of a failed query is responded to the first SMF. In comparison with conventional technologies, when the second message is used for multicast session establishment, a message for a failed query may be fed back, and no new MB-SMF is allocated. In this way, an unauthorized request may be identified based on the indication indicating that the query fails. For other query requests for multicast session establishment, for example, when performing query, an AF/NEF/MBSF allocates a new MB-SMF based on other information such as slices and DNNs when finding that no MB-SMF is available based on existing normal logic. The foregoing describes the method in embodiments of this application, and the following describes an apparatus in embodiments of this application. The method and the apparatus are based on a same inventive concept. Because the method and the apparatus have a similar problemresolving principle, for implementations of the apparatus and the method, refer to each other, and no repeated description is provided.

In embodiments of this application, the apparatus may be divided into functional modules based on the foregoing method examples. For example, the apparatus may be divided into functional modules corresponding to functions, or two or more functions may be integrated into one module. These modules may be implemented in a form of hardware, or may be implemented in a form of a software functional module. It should be noted that, in embodiments of this application, division into modules is an example, and is merely a logical function division. In an actual implementation, there may be another division manner.

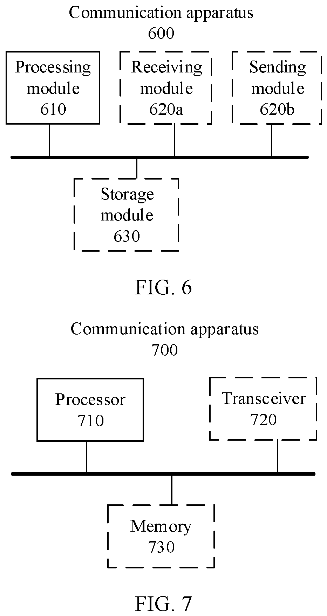

Based on a same technical concept as the foregoing method, FIG. 6 is a schematic diagram of a structure of a communication apparatus 600. The apparatus 600 may include: a processing module 610, and optionally, further include a receiving module 620a, a sending module 620b, and a storage module 630. The processing module 610 may be separately connected to the storage module 630, the receiving module 620a, and the sending module 620b. The storage module 630 may also be connected to the receiving module 620a and the sending module 620b.

In an example, the receiving module 620a and the sending module 620b may alternatively be integrated together as a transceiver module.

In an example, the apparatus 600 may be a first SMF network element, or may be a chip or a functional unit used in the first SMF network element. The apparatus 600 has any function of the first SMF network element in the foregoing method. For example, the apparatus 600 can perform the steps performed by the first SMF network element in the method in FIG. 2, FIG. 3, FIG. 4, and FIG. 5.

The receiving module 620a may perform a receiving action performed by the first SMF network element in the foregoing method embodiments.

The sending module 620b may perform a sending action performed by the first SMF network element in the foregoing method embodiments.

The processing module 610 may perform an action, other than the sending action and the receiving action, performed by the first SMF network element in the foregoing method embodiments.

In an example, the receiving module 620a is configured to receive a first message from a terminal device. The first message includes a multicast address. The first message indicates that the terminal device requests to join a multicast session corresponding to the multicast address.

The sending module 620b is configured to send a second message to a network registration function NRF network element. The second message includes the multicast address. The second message is used to query for an SMF that establishes a multicast session for a multicast service corresponding to the multicast address.

The receiving module 620a is further configured to receive a third message from the NRF. The third message indicates that the SMF that establishes the multicast session for the multicast service corresponding to the multicast address is not found.

The sending module 620b is further configured to send a fourth message to the terminal device. The fourth message indicates that the terminal device is rejected to join the multicast session corresponding to the multicast address.

In an example, the receiving module 620a is configured to receive a first message from a terminal device. The first message includes a multicast address. The first message indicates that the terminal device requests to join a multicast session corresponding to the multicast address.

The sending module 620b is configured to send a second message to a network registration function NRF network element. The second message includes the multicast address. The second message is used to query for an SMF that establishes a multicast session for a multicast service corresponding to the multicast address.

The receiving module 620a is configured to receive a third message from the NRF. The third message includes a second SMF. The second SMF supports establishment of the multicast session for the multicast service corresponding to the multicast address.

The sending module 620b is configured to send a fourth message to the terminal device. The fourth message indicates that the terminal device is accepted to join the multicast session corresponding to the multicast address.

The processing module 610 is configured to generate the second message, generate the fourth message, and the like.

In an example, the storage module 630 may store computer-executable instructions for the method performed by the first SMF network element, to enable the processing module 610, the receiving module 620a, and the sending module 620b to perform the method performed by the first SMF network element in the foregoing examples.

For example, the storage module may include one or more memories. The memory may be one or more devices or components that are in a circuit and that are configured to store a program or data. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like

In an example, the apparatus 600 may be an NRF network element, or may be a chip or a functional unit used in the NRF network element. The apparatus 600 has any function of the NRF network element in the foregoing method. For example, the apparatus 600 can perform the steps performed by the NRF network element in the method in FIG. 2, FIG. 3, FIG. 4, and FIG. 5.

The receiving module 620a may perform a receiving action performed by the NRF network element in the foregoing method embodiments.

The sending module 620b may perform a sending action performed by the NRF network element in the foregoing method embodiments.

The processing module 610 may perform an action, other than the sending action and the receiving action, performed by the NRF network element in the foregoing method embodiments.

In an example, the receiving module 620a is configured to receive a second message from a first SMF network element. The second message includes a multicast address. The second message is used to query for an SMF that establishes a multicast session for a multicast service corresponding to the multicast address.

The sending module 620b is configured to send a third message to the first SMF network element. The third message indicates that the SMF that establishes the multicast session for the multicast service corresponding to the multicast address is not found. Alternatively, the third message includes information of a second SMF. The second SMF supports establishment of the multicast session for the multicast service corresponding to the multicast address.

The processing module 610 is configured to locally query whether the multicast address belongs to an allowed multicast address of an operator.

The processing module 610 is configured to query, from a unified data repository UDR network element, whether the multicast address belongs to the allowed multicast address of the operator.

In an example, the storage module 630 may store computer-executable instructions for the method performed by the NRF network element, to enable the processing module 610, the receiving module 620a, and the sending module 620b to perform the method performed by the NRF network element in the foregoing examples.

For example, the storage module may include one or more memories. The memory may be one or more devices or components that are in a circuit and that are configured to store a program or data. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

As a possible product form, the apparatus may be implemented by using a general bus architecture.

FIG. 7 is a schematic block diagram of a communication apparatus 700.

The apparatus 700 may include: a processor 710, and optionally, further include a transceiver 720 and a memory 730. The transceiver 720 may be configured to receive programs or instructions and transmit the programs or the instructions to the processor 710. Alternatively, the transceiver 720 may be configured to perform communication interaction between the apparatus 700 and another communication device, for example, exchange of control signaling and/or service data. The transceiver 720 may be a code and/or data read/write transceiver, or the transceiver 720 may be a signal transmission transceiver between a processor and a transceiver machine. The processor 710 and the memory 730 are electrically coupled.

In an example, the apparatus 700 may be a first SMF network element, or may be a chip used in the first SMF network element. It should be understood that the apparatus has any function of the first SMF network element in the foregoing method. For example, the apparatus 700 can perform the steps performed by the first SMF network element in the method in FIG. 2, FIG. 3, FIG. 4, and FIG. 5. For example, the memory 730 is configured to store a computer program. The processor 710 may invoke the computer program or instructions stored in the memory 730, to perform the method performed by the first SMF network element in the foregoing example, or perform, by using the transceiver 720, the method performed by the first SMF network element in the foregoing example.

In an example, the apparatus 700 may be an NRF network element, or may be a chip used in the NRF network element. It should be understood that the apparatus has any function of the NRF network element in the foregoing method. For example, the apparatus 700 can perform the steps performed by the NRF network element in the method in FIG. 2, FIG. 3, FIG. 4, and FIG. 5. For example, the memory 730 is configured to store a computer program. The processor 710 may invoke the computer program or instructions stored in the memory 730, to perform the method performed by the NRF network element in the foregoing example, or perform, by using the transceiver 720, the method performed by the NRF network element in the foregoing example. The processing module 610 in FIG. 6 may be implemented by using the processor 710.

The receiving module 620a and the sending module 620b that are in FIG. 6 may be implemented by using the transceiver 720. Alternatively, the transceiver 720 includes a receiver and a transmitter. The receiver performs a function of the receiving module, and the transmitter performs a function of the sending module.

The storage module 630 in FIG. 6 may be implemented by using the memory 730.

As a possible product form, the apparatus may be implemented by a general-purpose processor (where the general-purpose processor may also be referred to as a chip or a chip system).

In a possible implementation, the general-purpose processor implementing the apparatus used in the first SMF network element or the apparatus used in the NRF network element includes a processing circuit (where the processing circuit may also be referred to as a processor). Optionally, the general-purpose processor further includes an input/output interface and a storage medium (where the storage medium may also be referred to as a memory) that are internally connected to and communicate with the processing circuit. The storage medium is configured to store instructions executed by the processing circuit, to perform the method performed by the first SMF network element or the NRF network element in the foregoing example.

The processing module 610 in FIG. 6 may be implemented by using the processing circuit.

The receiving module 620a and the sending module 620b that are in FIG. 6 may be implemented by using the input/output interface. Alternatively, the input/output interface includes an input interface and an output interface. The input interface performs a function of the receiving module, and the output interface performs a function of the sending module.

The storage module 630 in FIG. 6 may be implemented by using the storage medium.

As a possible product form, the apparatus in embodiments of this application may be further implemented by using the following: one or more FPGAs (field programmable gate array), a PLD (programmable logic device), a controller, a status machine, gate logic, a discrete hardware component, any other proper circuit, a circuit capable of executing functions described throughout this application, or any combination thereof.

An embodiment of this application further provides a computer-readable storage medium that stores a computer program. When the computer program is executed by a computer, the computer is enabled to perform the foregoing communication method. In other words, the computer program includes instructions used for implementing the foregoing communication method.

An embodiment of this application further provides a computer program product, including: computer program code; and when the computer program code runs on a computer, the computer is enabled to perform the communication method provided above.

An embodiment of this application further provides a communication system, where the communication system includes a first SMF network element and an NRF network element that perform the foregoing communication method.

In addition, the processor mentioned in embodiments of this application may be a central processing unit (central processing unit, CPU) or a baseband processor, where the baseband processor and the CPU may be integrated or separated; or may be a network processor (network processor, NP) or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), and another programmable logic device, a discrete gate or transistor logic device, a discrete hardware component, or any combination thereof. The general-purpose processor may be a microprocessor, or the processor may be any conventional processor or the like.

The memory mentioned in embodiments of this application may be a volatile memory or a non-volatile memory, or may include a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), used as an external cache. Through example but not limitative descriptions, many forms of RAMs may be used, for example, a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDR SDRAM), an enhanced SDRAM (Enhanced SDRAM, ESDRAM), a synchlink DRAM (Synchlink DRAM, SLDRAM), and a direct rambus RAM (Direct Rambus RAM, DR RAM). It should be noted that the memory described in this application is intended to include but not limited to these memories and any memory of another appropriate type.

The transceiver mentioned in embodiments of this application may include a separate transmitter and/or a separate receiver, or the transmitter and the receiver may be integrated. The transceiver may operate based on instructions of a corresponding processor. Optionally, the transmitter may correspond to a transmitter machine in a physical device, and the receiver may correspond to a receiver machine in the physical device.

A person of ordinary skill in the art may be aware that, in combination with the examples described in embodiments disclosed in this specification, the steps in the method and units may be implemented by electronic hardware, computer software, or a combination thereof. To clearly describe the interchangeability between the hardware and the software, the foregoing has generally described steps and compositions of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into the units is merely logical function division. In an actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and the parts displayed as units may or may not be physical units, may be located in one position, or may be distributed on a plurality of network units. Some or all of the units may be selected according to actual requirements to achieve the objectives of the solutions of embodiments in this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on this understanding, the technical solutions in this application essentially, or the part contributing to conventional technologies, or some or all of the technical solutions may be represented in a form of a software product. The computer software product is stored in a storage medium and includes several instructions for enabling a computer device (which may be a personal computer, a server, a network device, or the like) to perform some or all of the steps in the method described in embodiments of this application. The foregoing storage medium includes any medium that can store program code, for example, a USB flash drive, a removable hard disk drive, a read-only memory (read-only memory, ROM), a random access memory (random access memory, RAM), a magnetic disk, or an optical disc.

A term "and/or" in this application describes an association relationship between associated objects and represents that three relationships may exist. For example, A and/or B may represent three cases: Only A exists, both A and B exist, and only B exists. A character "/" generally indicates an "or" relationship between the associated objects. "A plurality of' in this application means two or more. In addition, it should be understood that in descriptions of this application, terms such as "first" and "second" are merely used for distinguishing and descriptions, but should not be understood as indicating or implying relative importance, or should not be understood as indicating or implying a sequence.

Although some example embodiments of this application have been described, a person skilled in the art can make changes and modifications to these embodiments once they learn the basic inventive concept. Therefore, the following claims are intended to be construed as to cover the preferred embodiments and all changes and modifications falling within the scope of this application.

Clearly, a person skilled in the art can make various modifications and variations to embodiments of this application without departing from the spirit and scope of embodiments of this application. This application is intended to cover these modifications and variations of this application provided that they fall within the scope of the claims of this application and their equivalent technologies.

## Claims

1. A communication method, comprising:
receiving, by a first session management function SMF network element, a first message from a terminal device, wherein the first message comprises a multicast address, and the first message indicates that the terminal device requests to join a multicast session corresponding to the multicast address;
sending, by the first SMF network element, a second message to a network registration function NRF network element, wherein the second message comprises the multicast address, and the second message is used to query for an SMF network element that establishes a multicast session for a multicast service corresponding to the multicast address;
receiving, by the first SMF network element, a third message from the NRF network element, wherein the third message indicates that the SMF network element that establishes a multicast session for the multicast service corresponding to the multicast address is not found; and
sending, by the first SMF network element, a fourth message to the terminal device, wherein the fourth message indicates that the terminal device is rejected to join the multicast session corresponding to the multicast address.

2. The method according to claim 1, wherein the second message is a network function discovery request.

3. The method according to claim 1 or 2, wherein the third message is a network function discovery response.

4. The method according to any one of claims 1 to 3, wherein the third message comprises a second indication, wherein the second indication indicates that the query fails.

5. The method according to any one of claims 1 to 4, wherein the third message comprises an empty SMF network element list.

6. The method according to any one of claims 1 to 5, wherein the first message comprises a multicast/broadcast service MBS session join request.

7. The method according to any one of claims 1 to 6, wherein the receiving, by a first session management function SMF network element, a first message from a terminal device comprises:
receiving, by the first SMF network element, the first message by using a protocol data unit PDU session modification request message.

8. The method according to any one of claims 1 to 7, wherein the first SMF network element is a unicast SMF network element, and the SMF network element that establishes a multicast session for the multicast service corresponding to the multicast address is a multicast/broadcast MB-SMF network element.

9. A communication method, comprising:
receiving, by a network registration function NRF network element, a second message from a first session management function SMF network element, wherein the second message comprises a multicast address, and the second message is used to query for an SMF network element that establishes a multicast session for a multicast service corresponding to the multicast address; and
sending, by the NRF network element, a third message to the first SMF network element, wherein the third message indicates that the SMF network element that establishes a multicast session for the multicast service corresponding to the multicast address is not found.

10. The method according to claim 9, wherein the third message comprises a second indication, wherein the second indication indicates that the query fails.

11. The method according to claim 9 or 10, wherein the third message comprises an empty SMF list.

12. The method according to any one of claims 9 to 11, wherein the second message is a network function discovery request.

13. The method according to any one of claims 9 to 12, wherein the third message is a network function discovery response.

14. The method according to any one of claims 9 to 13, wherein the sending, by the NRF network element, a third message to the first SMF network element comprises:
sending, by the NRF network element, the third message to the first SMF network element when there is no multicast/broadcast MB-SMF network element whose allowed multicast address comprises the multicast address.

15. The method according to any one of claims 9 to 13, wherein the sending, by the NRF network element, a third message to the first SMF network element comprises:
sending, by the NRF network element, the third message to the first SMF network element when a multicast/broadcast MB-SMF network element currently serving the multicast service corresponding to the multicast address does not exist, and an allowed multicast address of the MB-SMF network element does not comprise the multicast address.

16. The method according to claim 14 or 15, wherein the allowed multicast address of the MB-SMF network element is preconfigured by an operator for the MB-SMF network element.

17. The method according to any one of claims 14 to 16, wherein a quantity of allowed multicast addresses of the MB-SMF network element is a range.

18. The method according to any one of claims 14 to 17, wherein the method further comprises:
receiving, by the NRF network element, the allowed multicast address of the MB-SMF network element reported by the MB-SMF network element.

19. The method according to any one of claims 9 to 13, wherein the sending, by the NRF network element, a third message to the first SMF network element comprises:
sending, by the NRF network element, the third message to the first SMF network element when an allowed multicast address of an operator does not comprise the multicast address.

20. The method according to claim 19, wherein the method further comprises:
receiving, by the NRF network element, the allowed multicast address of the operator.

21. The method according to claim 19, wherein the method further comprises:
locally querying, by the NRF network element, whether the multicast address belongs to the allowed multicast address of the operator; or
querying, by the NRF network element from a unified data repository UDR network element, whether the multicast address belongs to the allowed multicast address of the operator.

22. The method according to any one of claims 9 to 21, wherein the first SMF network element is a unicast SMF network element, and the SMF network element that establishes the multicast session for the multicast service corresponding to the multicast address is a multicast/broadcast MB-SMF network element.

23. A communication apparatus, comprising: a processor, wherein the processor is coupled to a memory, wherein
the memory is configured to store computer programs or instructions; and
the processor is configured to execute some or all of the computer programs or instructions in the memory; and when the some or all of the computer programs or instructions are executed, the processor is configured to implement the method according to any one of claims 1 to 8 or the method according to any one of claims 9 to 22.

24. A chip system, wherein the chip system comprises a processing circuit, and the processing circuit is coupled to a storage medium; and
the processing circuit is configured to execute some or all computer programs or instructions in the storage medium; and when the some or all computer programs or instructions are executed, the processing circuit is configured to implement the method according to any one of claims 1 to 8 or the method according to any one of claims 9 to 22.

25. A computer-readable storage medium, configured to store a computer program, wherein the computer program comprises instructions used for implementing the method according to any one of claims 1 to 8, or instructions used for implementing the method according to any one of claims 9 to 22.

26. A computer program product, wherein the computer program product comprises computer program code; and when the computer program code runs on a computer, the computer is enabled to perform the method according to any one of claims 1 to 8 or the method according to any one of claims 9 to 22.

27. A communication system, comprising: a first session management function SMF network element and a network registration function NRF network element, wherein
the first SMF network element is configured to perform the method according to any one of claims 1 to 8; and
the NRF network element is configured to perform the method according to any one of claims 9 to 22.

28. A communication method, comprising:
receiving, by a first session management function SMF network element, a first message from a terminal device, wherein the first message comprises a multicast address, and the first message indicates that the terminal device requests to join a multicast session corresponding to the multicast address;
sending, by the first SMF network element, a second message to a network registration function NRF network element, wherein the second message comprises the multicast address, and the second message is used to query for an SMF network element that establishes a multicast session for a multicast service corresponding to the multicast address;
receiving, by the NRF network element, the second message, and sending a third message to the first SMF network element, wherein the third message indicates that the SMF network element that establishes a multicast session for the multicast service corresponding to the multicast address is not found; and
receiving, by the first SMF network element, the third message, and sending a fourth message to the terminal device, wherein the fourth message indicates that the terminal device is rejected to join the multicast session corresponding to the multicast address.
